# EUROPEAN PATENT SPECIFICATION

(11) **EP 0 849 495 B1**
(45) Date of publication and mention of the grant of the patent: **27.10.2004**
(21) Application number: 97120738.6
(22) Date of filing: 26.11.1997
(51) Int. Cl.: F16F 15/00, F16F 15/023, E01B 9/60, E01B 19/00, F16F 9/30

(54) **Method of damping vibrations**
Verfahren zur Dämpfung von Schwingungen
Procédé d'amortissement de vibrations

(30) Priority: 26.11.1996 JP 33040396; 27.10.1997 JP 31135997
(43) Date of publication of application: 24.06.1998
(73) Proprietor: C.I. KASEI CO., LTD, Chuo-ku Tokyo (JP); NICHIAS CORPORATION, Tokyo (JP); RAILWAY TECHNICAL RESEARCH INSTITUTE, Kokubunji-shi Tokyo (JP)
(72) Inventor: Hansaka, Masanori, Kokubunji-shi, Tokyo (JP); Mifune, Naoto, Kokubunji-shi, Tokyo (JP); Sato, Hitoshi, Chuo-ku, Tokyo (JP); Takinosawa, Hiromi, Chuo-ku, Tokyo (JP); Nishimoto, Kazuo, Nichias Corp., Hamamatsu-shi, Shizuoka (JP)
(74) Representative: Füchsle, Klaus, Dipl.-Ing.

(56) References cited:
- EP-A- 0 150 264
- EP-A- 0 364 756
- DE-A- 3 147 387
- DE-A- 4 222 715
- DE-A- 4 225 581
- DE-A- 4 423 331
- FR-A- 2 012 921
- PATENT ABSTRACTS OF JAPAN vol. 018, no. 021 (P-1674), 13 January 1994 (1994-01-13) & JP 05 257485 A (RAILWAY TECHNICAL RES INST;OTHERS: 01), 8 October 1993 (1993-10-08)
- PATENT ABSTRACTS OF JAPAN vol. 015, no. 389 (M-1164), 2 October 1991 (1991-10-02) & JP 03 159735 A (RAILWAY TECHNICAL RES INST;OTHERS: 01), 9 July 1991 (1991-07-09)

## Description

### BACKGROUND OF THE INVENTION

### 1. Field of the Invention

The present invention relates to a method of damping vibrations using a magnetic-vibration-damper of a composite type, which damper is formed by laminating a plate having elasticity and a polymer viscoelastic material containing magnetized magnetic powder and can be attached to a vibrating body having a curved surface.

### 2. Description of the Related Art

Hitherto, a magnetic-vibration-damper of a composite type disclosed by the applicant of the present invention and so forth has been known as a vibration-damper for preventing noise and vibrations occurring when a train passes through a railway girder bridge made of steel or the like. The foregoing magnetic-vibration-damper of a composite type is formed by laminating a plate in the form of a rigid body and a layer made of a polymer viscoelastic material containing magnetized magnetic powder (refer to Japanese Patent Publication No. 7-51339). Another example can be found in the closest prior art JP05-257485.

Since the magnetic-vibration-damper of a composite type has the structure that the polymer viscoelastic material layer has magnetic force, the magnetic-vibration-damper of a composite type can easily be attracted to the surface of a steel girder bridge or the like by bringing the surface of the polymer viscoelastic material to the foregoing surface. When the steel girder bridge or the like is vibrated in the above-mentioned state, vibrations are propagated through the polymer viscoelastic material. Therefore, the polymer viscoelastic material is vibrated together with the steel girder bridge or the like. Since the rigid plate is laminated on the polymer viscoelastic material by bonding or the like, the movement of the polymer viscoelastic material is constrained by the rigid plate. Therefore, the vibration energy is, in the polymer viscoelastic material, converted into thermal energy and thus-generated heat is dispersed and lost. As a result, the vibration energy is first reduced attributable to the internal loss in the polymer viscoelastic material (hereinafter called an "internal loss damping effect").

On the other hand, the polymer viscoelastic material and the steel girder bridge or the like are not perfectly secured to each other in their boundary, that is, the polymer viscoelastic material is simply attracted to the steel girder bridge or the like (magnetically attracted) by dint of magnetic force. Therefore, if external force larger than a predetermined magnitude acts, "slippage" or "displacement" of the polymer viscoelastic material with respect to the steel girder bridge or the like will take place. Thus, vibrations are transmitted from the steel girder bridge or the like into the polymer viscoelastic material. When the polymer viscoelastic material is deformed in the boundary, sliding friction is generated by the polymer viscoelastic material and the steel girder bridge or the like. Thus, the polymer viscoelastic material is vibrated (deformed) on the boundary in a state where the sliding friction acts on the polymer viscoelastic material. At this time, the vibration energy is converted into thermal energy and thus-generated heat is dispersed and lost. Therefore, the vibration energy is as well as reduced attributable to the sliding friction on the boundary between the polymer viscoelastic material and the steel girder bridge or the like (hereinafter called a "sliding friction damping effect".

Dampers earlier than the above-mentioned magnetic-vibration-damper of a composite type (refer to Japanese Patent Publication No. 7-51339) have been arranged to depend on only the internal loss damping effect. However, the above-mentioned magnetic-vibration-damper of a composite type is arranged in such a manner that the sliding friction damping effect plays a big part as well as or greater than that of the internal loss damping effect. Thus, the synergistic effect of the above-mentioned two effects has been confirmed also from experiments and the like to attain an excellent vibration damping effect superior to that of the conventional vibration damper.

As compared with the conventional vibration damper arranged to be attached to the vibrating body with a bonding agent or the like, the above-mentioned magnetic-vibration-damper of a composite type (refer to Japanese Patent Publication No. 7-51339) is attracted and supported by the magnetic force when the vibrating body is formed by a steel plate or the like. Therefore, an operation for applying the bond or the like can be eliminated and thus an operation for attaching the vibration damper to the vibrating body can be performed very easily as compared with the conventional vibration dampers.

Moreover, the vibration damping effect of the conventional vibration damper has been obtained by dint of the energy loss in the polymer viscoelastic material. However, a loss factor indicating the energy loss has temperature dependency having a large peak value at a predetermined temperature and undergoing rapid reduction at temperatures deviated from the foregoing temperature. However, the above-mentioned magnetic-vibration-damper of a composite type (refer to Japanese Patent Publication No. 7-51339) having a significant effect of the vibration damping effect obtained attributable to the sliding friction which is substantially constant in a wide temperature range. Therefore, the vibration damping effect does not deteriorate even if the temperature is changed. Thus, the temperature dependency of the internal loss vibration damping effect is moderated. As a result, excellent vibration damping effect has been confirmed from experiments and the like to be exhibited in a wide temperature range as compared with the conventional vibration damper.

When the above-mentioned magnetic-vibration-damper of a composite type (refer to Japanese Patent Publication No. 7-51339) is structured in such a manner that the vibrating body is a member having a curved vibrating surface, there arises the following problems.

That is, if the rigid plate is made of a material, such as ceramics, having brittleness, the rigid plate can be manufactured by molding the foregoing material into a curved shape. However, a polymer viscoelastic material layer having a uniform thickness cannot easily be formed on the molded rigid plate as compared with a flat plate.

If the Young's modulus of elasticity of the constraining plate is lower than 29,4 x 10⁸ pascal (300 kgf/mm²), the rigidity is unsatisfactory to obtain required force to constrain the magnetic layer. As a result, deformation in the magnetic layer cannot easily take place, thus causing the vibration damping performance attributable to the internal loss to deteriorate. Since the constraining force to the magnetic layer is unsatisfactory in the foregoing case, the overall body of the vibration damper easily follows vibrations of the vibrating body. Thus, sliding friction cannot easily take place in the boundary between the vibrating body and the magnetic layer. As a result, the vibration damping performance in a wide temperature range, which is the advantageous effect of the present invention, cannot be exhibited.

### SUMMARY OF THE INVENTION

In view of the foregoing, an object of the present invention is to provide a method of damping vibrations using a magnetic-vibration-damper of a composite type capable of damping the vibration of a vibrating body having a curved vibrating surface.

According to the present invention there is provided a method of damping vibrations of a vibrating surface of a vibrating body made of a ferromagnetic material and including a curved surface, said method comprising the steps of: using one or plural layers of magnetic-vibration-damper of a composite type having one or a plurality of constraining plates made of a material having a Young's modulus of elasticity of 29.4 x 10⁸ pascal (300 kgf/mm²) or higher and one or a plurality of magnetic layers made of a polymer viscoelastic material having magnetic powder magnetized to have a residual magnetic flux density of about 2.5 x 10⁻³ tesla (25 gausses) to about 1.5 tesla (15,000 gausses) and laminated on said constraining plates; and one of steps a) or b) as follows: a) using plastic deformation of a weak cross section portion of a said constraining plate to plastically deform said constraining plate in such a way as to make substantially coincide the surface shape of said magnetic layer with the shape of said vibrating surface; and using magnetic force of the magnetic powder to cause substantially the overall surface of said magnetic layer to be magnetically adsorbed to said vibrating surface so that said magnetic-vibration-damper of a composite type is attached to said vibrating surface to cause vibration energy of said vibrating body to be lost in said magnetic layer constrained by said constraining plate and to cause the same to be lost attributable to sliding friction at the boundary between said vibrating surface and said magnetic layer; b) using elastic repulsion of a said constraining plate to join said magnetic layer to said vibrating surface to make substantially coincide the surface shape of said magnetic layer with the shape of the vibrating surface; and using magnetic force of the magnetic powder to cause substantially the overall surface of the magnetic layer to be magnetically adsorbed to said vibrating surface so that said magnetic-vibration-damper of composite type is attached to said vibrating surface to cause vibration energy of said vibrating body to be lost in said magnetic layer constrained by said constraining plate and to cause the same to be lost attributable to sliding friction at the boundary between said vibrating surface and said magnetic layer.

The elasticity of the constraining plate may be used to join the magnetic layer to the vibrating surface.

The constraining plate may have plasticity and a weak cross-section portion which can be plastically deformed in a direction in which the surface shape of said constraining plate is made to coincide with the shape of the vibrating surface.

Plastic deformation of the weak cross section portion may be performed by any one of compression of the constraining plate at a specific position, bending of a specific portion of the constraining plate, caulking of the weak cross section portion, or their combination.

The vibrating body may be a railway rail.

The above and other objects of the present invention will be more apparent from the following description taken in conjunction with the accompanying drawings which relate to various embodiments of dampers. The embodiments do not form part of the invention but represent background art or are useful for understanding the invention, which is the method of damping vibrations according to claim 1.

### BRIEF DESCRIPTION OF THE DRAWINGS

Fig. 1 is a cross sectional view showing the structure of a rail vibration damper according to a first embodiment;
Fig. 2 is a side view showing the structure of the rail vibration damper shown in Fig. 1;
Fig. 3 is a cross sectional view showing a detailed structure of a body vibration damper of the rail vibration damper shown in Fig. 1;
Figs. 4A to 4D are schematic views showing a method of manufacturing the body vibration damper of the rail vibration damper shown in Fig. 1;
Figs. 5A and 5B are schematic views showing a method of attaching the body vibration damper of the rail vibration damper shown in Fig. 1 to a rail;
Fig. 6 is a cross sectional view showing the structure of a rail vibration damper according to a second embodiment;
Fig. 7 is a cross sectional view showing the structure of a rail vibration damper according to a third embodiment;
Figs. 8A to 8C are diagrams showing the structure of a fourth embodiment;
Figs. 9A and 9B are diagrams showing the structure of a rail vibration-damping unit according to a fifth embodiment, in which Fig. 9A is a cross sectional view and Fig. 9B is a side view;
Figs. 10A to 10D are diagrams showing, further in detail, the structure of a magnetic-vibration-damper of a composite type of the rail vibration-damping unit shown in Figs. 9A and 9B, in which Fig. 10A is a side view when viewed from a position adjacent to the constraining plate, Fig. 10B is an enlarged view of a portion adjacent to a lengthwise directional end shown in Fig. 10A, Fig. 10C is a cross sectional view taken along line A-A shown in Fig. 10B and Fig. 10D is a cross sectional view taken along line B-B shown in Fig. 10B;
Figs. 11A and 11B are diagrams showing the structure of a rail vibration-damping unit according to a sixth embodiment, in which Fig. 11A is a cross sectional view and Fig. 11B is a cross sectional view taken along line C-C;
Fig. 12 is a cross sectional view showing the structure of a rail vibration-damping unit according to a modification of the sixth embodiment;
Fig. 13 is a cross sectional view showing the structure of a rail vibration-damping unit according to a modification of the sixth embodiment;
Figs. 14A and 14B are diagrams showing the structure of a rail vibration-damping unit according to a seventh embodiment, in which Fig. 14A is a cross sectional view and Fig. 14B is a side view;
Fig. 15 is a cross sectional view showing the structure of a rail vibration-damping unit according to an eighth embodiment; and
Figs. 16A to 16D are schematic views showing a method of manufacturing the magnetic-vibration-damper of a composite type which can be used in the method according to the present invention.

### DETAILED DESCRIPTION OF THE PREFERRED EMBODIMENTS

The present invention will now be described with reference to the drawings.

### (1) First Embodiment

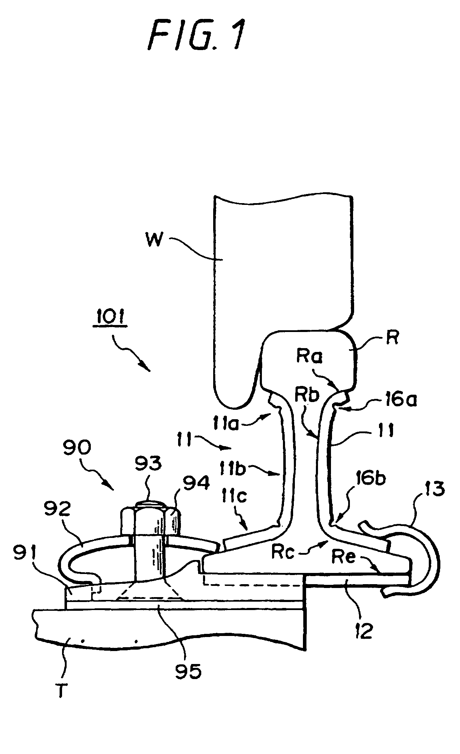

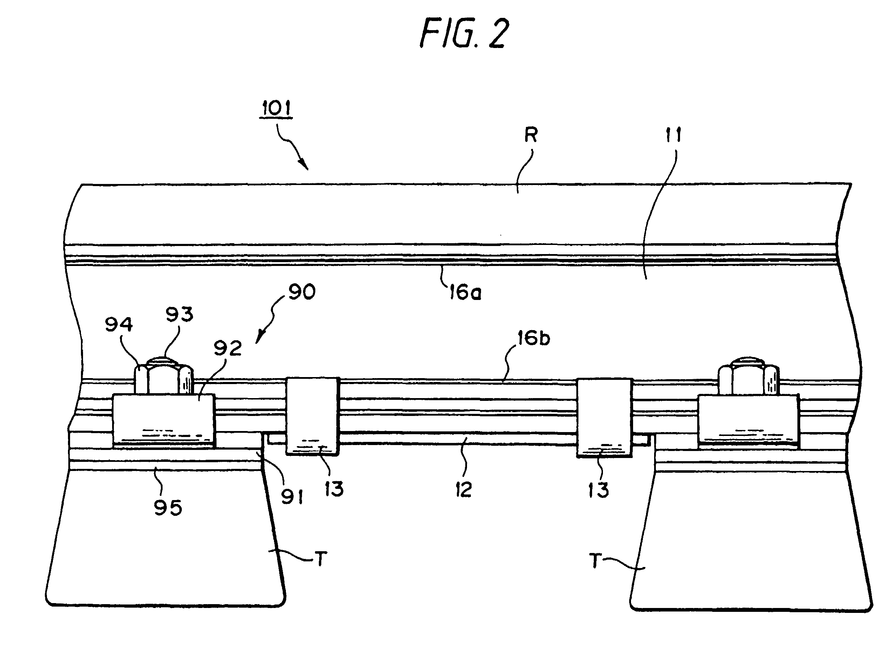

Fig. 1 is a cross sectional view showing the structure of a rail vibration-damping unit which is a first embodiment of a magnetic-vibration-damper of a composite type. Referring to Fig. 1, the right-hand portion of a rail R shows the structure between sleepers T and the left-hand portion of the rail R shows the structure of the sleeper T at the position of a rail clamper unit 90. Fig. 2 is a side view showing the structure of a rail vibration-damping unit.

The rails R are made of steel, which is a ferromagnetic material and clamped to the upper surfaces of sleepers T by a rail clamper units 90. Vibrations are generated when wheels W run on the rails R. The rail R corresponds to a vibrating body or a columnar body. The rail clamper unit 90 comprises a steel tie plate 91 for supporting a bottom plate of the rail R, a steel leaf spring 92 for elastically supporting the rail R on the tie plate 91, a steel clamping bolt 93 and clamping nut 94 for clamping the leaf spring 92 and a track pad 95 made of synthetic rubber or the like and arranged to elastically support the tie plate 91 onto the sleeper T.

As shown in Figs. 1 and 2, the rail vibration-damping unit 101 comprises body vibration-dampers 11 attached to the right and left side surfaces Rbb and R of the body of the rail R, an underfloor vibration damper 12 attached to a lower surface Re of the bottom plate and a separation stopper 13 which secures the vibrations damping members 11 and 12 with the spring force of a spring to prevent separation of the same from the rail R. Therefore, the right and left body side surfaces Rb, the right and left upper surfaces Rc of the bottom plate and the lower surface Re of the bottom plate correspond to the vibrating surface. Four separation stoppers 13 are attached to right and left positions of two places between the sleepers T. The separation stoppers 13 are required to be attached to right and left positions of at least one portion of the rail. The number of the vibration-damper regulators 13 must be at least two or more.

The body vibration-damper 11 is formed into a groove shape having an asymmetrical U-shape cross section. The body vibration-damper 11 has a first portion 11a which is in close contact with a jaw portion Ra in the lower portion of the head portion of the rail R, a second portion 11b which is in close contact with the side surface Rb of the body of the rail R and a third portion 11c arranged to be in close contact with the upper surface Rc of the bottom plate of the rail R and formed into a substantially inclined shape. The leading end of the first portion 11a extends to a position at which the rolling of the flange of the wheel W of the train which runs on the rail R is not obstructed. The leading end of the third portion 11c extends to a position at which the leaf spring 92 of the rail clamper unit 90 for clamping the rail R to the sleeper T is not obstructed. A groove 16a extending in the lengthwise direction of the rail R is disposed on the surface of a constraining plate 14 (to be described later) in a bent connection portion between the first portion 11a and the second portion 11b. A groove 16b extending in the lengthwise direction of the rail R is disposed on the surface of the constraining plate 14 in the bent connection portion between the second portion 11b and the third portion 11c. If the length of the body vibration-damper 11 in the lengthwise direction of the rail R is included in a range shorter than the distance between ends of a joint plate (not shown) for establishing the connection between adjacent rails R, an arbitrary length may be selected.

The underfloor vibration damper 12 is formed into a flat plate-like shape having a substantially rectangular projected shape. The length of the underfloor vibration damper 12 in the lengthwise direction of the rail R may be determined arbitrarily if the length is shorter than the distance between ends of adjacent sleepers T, as shown in Fig. 2.

The separation stopper 13 is made of an elastic material, such as steel, and formed into a plate-like shape having a U-shape cross section facing side.

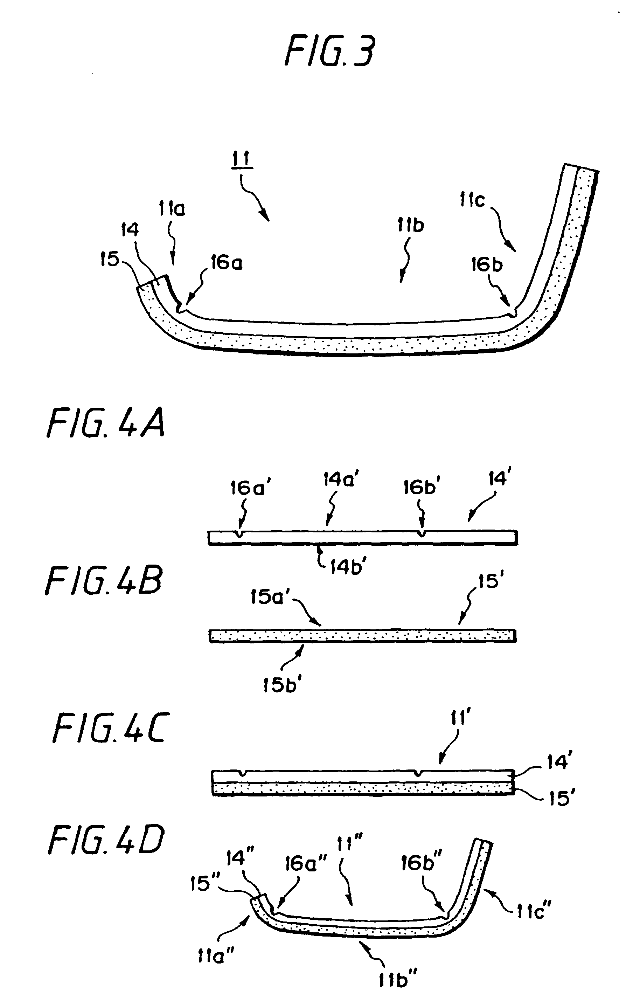

Further detailed structure of the body vibration-damper 11 will now be described with reference to Fig. 3.

The body vibration-damper 11 has a constraining plate 14 made of a steel plate or the like formed into a grooved member having an asymmetrical U-like cross section and a magnetic layer 15 made of magnetic rubber or the like, bonded to and laminated on the constraining plate 14 and having substantially the same cross sectional shape as that of the constraining plate 14. The grooves 16a and 16b formed, in each bent portion, in the surface of the constraining plate 14 to extend in the lengthwise direction of the rail R are elongated grooves each having a U-like cross section. Each of the grooves 16a and 16b may be formed to have a semicircular cross section, a V-like cross section, substantially rectangular cross section or a substantially trapezoidal cross section.

Although omitted from illustration, the underfloor vibration dampers 12 has a constraining plate having a flat plate-like shape and made of a steel plate or the like and a magnetic layer made of magnetic rubber or the like formed into a flat plate-like shape and arranged to be bonded to the constraining plate and laminated on the same.

A method of manufacturing the body vibration-damper 11 will now be described with reference to Figs. 4A to 4D.

Initially, a flat plate 14' having a substantially rectangular planar projected shape is prepared (see Fig. 4A). The flat plate 14' will be formed into the constraining plate of the damper. As the flat plate 14', a material having Young's modulus of elasticity of 29,4 x 10⁸ pascal (300 kgf/mm²) or higher, preferably Young's modulus of elasticity of 49 x 10⁸ pascal (500 kgf/mm²) or higher and plasticity is employed.

The material of the flat plate 14' is exemplified by a carbon steel plate, a laminated steel plate, a stainless steel plate, cold-rolled steel plate, a galvanized steel plate and the like. A copper-type plate, such as a copper plate or a copper alloy plate or an aluminum-type plate, such as an aluminum plate or an aluminum alloy plate, may be employed. If the above-mentioned elasticity and plasticity conditions are satisfied, a plate made of another metal material or a plate made of fiber reinforced metal (FRM) may be employed.

As the thickness of the metal plate member, thicknesses of about 0.1 mm to about 5.0 mm may be employed. The thickness of the metal plate member relates to the Young's modulus of elasticity. If the Young's modulus of elasticity of the metal plate member is a relatively large value included in the above-mentioned range, the rigidity of the plate can be maintained if the thickness is reduced. If the Young's modulus of elasticity of the metal plate member is a small value included in the foregoing range, the thickness must be somewhat reduced to maintain the rigidity of the plate.

If the above-mentioned elasticity and plasticity conditions are satisfied, a constraining plate made of a material except for the metal material may be employed. For example, a synthetic resin material may be employed which is exemplified by thermosetting resin including unsaturated polyester, epoxy resin, phenol resin and the like, and thermoplastic resin including nylon (polyamide resin), polycarbonate, polyacetal, polyethylene, polypropylene, ABS resin and the like. As an alternative to this, fiber reinforced synthetic resin ((FRP): Fiber Reinforced Plastics) using the above-mentioned resin as the matrix reinforced by synthetic resin fiber, such as glass fiber, carbon fiber or aromatic polyamide resin (aramide resin) may be employed. Since the above-mentioned synthetic resin materials generally has a small Young's modulus of elasticity as compared with a metal material, the thickness of the metal plate member must be enlarged. The thickness is required to be about 0.2 mm to about 5.0 mm.

A groove 16a' having a U-like cross section is formed at a position at which the groove 16a will be formed in the surface 14a' of the flat plate 14', and a groove 16b' having a U-like cross section is formed at a position at which the groove 16b will be formed in the surface 14a' by press molding or cutting work when the metal plate is employed or by injection molding when the synthetic resin plate is employed (see Fig. 4A).

A bonding agent, to be described later, is used to bond and laminate a flat sheet member 15' (see Fig. 4B) having substantially the same planar projected shape as that of the constraining plate 14 on a reverse side 14b' of the flat plate 14' so that a flat member 11' is formed (see Fig. 4C). The foregoing method will hereinafter be called a "sheet member bonding method". A method of forming the flat member 11' by the sheet member bonding method will now be described. The sheet member bonding method uses the sheet member 15' which will be formed as the magnetic layer of the vibration damper. The flat member 11' formed by bonding the flat plate 14' and the sheet member 15' to each other is molded so that the vibration damper is formed.

The sheet member 15' is formed by dispersing and mixing magnetized powder (not shown) having a residual magnetic flux density of about 2.5 x 10⁻³ tesla (25 gasses) to about 1.5 tesla (15,000 gausses), preferably a residual magnetic flux density of about 0.01 tesla (100 gausses), to about 1 tesla (10,000 gausses) in a layer made of the polymer viscoelastic material so as to be formed into a magnetic layer of the vibration damper.

If the residual magnetic flux density of the magnetic powder is smaller than 2.5 x 10⁻³ tesla (25 gasses), force for attracting the vibration damper to the vibrating body is too small to prevent separation, displacement, judder and the like. Thus a satisfactory vibration damping effect cannot be exhibited. If the residual magnetic flux density of the magnetic powder is larger than 1.5 tesla (15,000 gausses), the force for attracting the damper to the vibrating body is enlarged excessively to cause sliding friction to easily take place when vibrations are generated. Therefore, the damping performance in a wide temperature range which is an advantage of the present invention cannot be exhibited.

The viscoelastic material is a material having both viscosity and elasticity. In general, the material has a characteristic as the viscous material in a long observation time period when the material is deformed by applying external force and a characteristic as an elastic material in a short observation time period. The polymer viscoelastic material may be a rubber material, thermoplastic elastomer or a thermoplastic resin. The rubber material may be nitrile rubber (NBR), styrene butadiene rubber (SBR), natural rubber (NR), butyl rubber (IIR), polyisobutylene rubber, halogenated rubber, ethylene propylene rubber (EPM and EPDM), butadiene rubber (BR), isoprene rubber (IR), chloroprene rubber (CR), acrylic rubber (ACM and ANM), silicon rubber (Q), fluorine rubber (FKM), epichlorohydrine rubber (CO and ECO), urethane rubber (U), polynorbornane rubber, ethylene acrylic rubber, chlorosulfonated polyethylene (CSM), chlorinated polyethylene (CM) or the like.

The rubber material has resistances, including weather resistance, heat resistance, cold resistance, oil resistance, solvent resistance, fire retardance and the like, which are different depending upon the type, state of blending and whether or not vulcanization is performed. Therefore, a proper rubber material must be selected to be adaptable to the environmental condition of the vibrating body required to be damped. Since the rubber material cannot easily be softened and excellent heat resistance can be realized through the vulcanizing process is added as compared with thermoplastic synthetic resin or the like to be described later, the material must be selected to meet the purpose.

The thermoplastic elastomer (TPE) material may be, for example, styrene type TPE (TPS), olefin type TPE (TPO), vinyl chloride type TPE, urethane type TPE (TPU), ester type TPE (TPEE), polyamide type TPE, 1,2-polybutadiene type TPE or the like.

The thermoplastic resin material may be, for example, polystyrene, polyethylene, polypropylene, polyamide, polyphenylenesulfon, polybutylene terephthalate, vinyl chloride, EVA resin (ethylene-vinyl acetate copolymer resin), epoxy resin or the like.

The magnetic powder may be ferrite type magnetic powder or rare earth type magnetic powder. The ferrite magnetic powder is exemplified by a ferrite type material including strontium ferrite, barium ferrite or the like. The rare earth type magnetic powder is exemplified by powder of a samarium cobalt material, such as 1-5 samarium cobalt or 2-17 samarium cobalt, and powder of neodymium-iron-boron type material. The magnetic powder is mixed when the polymer viscoelastic material is manufactured, in particular, when the raw material is kneaded. The filling ratio of the magnetic powder to the polymer viscoelastic material is about 20 wt% to about 100 wt%, and preferably about 30 wt% to about 90 wt%. Specifically, it is preferable that the ferrite magnetic powder be filled by about 40 wt% to 95 wt%. Since the rare earth type magnetic powder has magnetic force stronger than that of the ferrite magnetic powder, the filling ratio of the same is required to be lower than that required for the ferrite magnetic powder.

If the filling ratio of the magnetic powder to the polymer viscoelastic material is too low, the force for attracting the vibration damper to the vibrating body is too small to satisfactorily obtain the vibration damping effect. If the filling ratio of the magnetic powder to the polymer viscoelastic material is too high, the force for attracting the vibration damper to the vibrating body becomes too strong. In this case, the vibration damping performance undesirably deteriorate, as described above. Moreover, the viscoelastic characteristic of the polymer viscoelastic material undesirably deteriorates.

After the magnetic powder has been mixed, the polymer viscoelastic material is molded into the sheet member 15' by press molding (the vulcanizing condition is usually about 170°C and about 20 minutes if the material is the rubber type material), injection molding, calender molding or the like. When the rubber type polymer is employed as the polymer viscoelastic material, vulcanization is usually performed. However, it may be used in a non-vulcanized state. When the thermoplastic elastomer or thermoplastic resin is employed as the polymer viscoelastic material, vulcanization is not required in general. If the thickness of the sheet member is too small, the polymer viscoelastic material cannot smoothly flow when the operation for molding the sheet is performed because the magnetic powder is mixed with the polymer viscoelastic material. Therefore, a magnetic layer having a thickness of about 0.4 mm or smaller cannot be formed into a single sheet member. In the foregoing case, a coating method to be described later is a suitable method.

Magnetization of the magnetic powder is performed before the sheet member 15' is bonded to the flat plate 14'. When magnetization is performed, a one-side multipole magnetizing type capacitor magnetizer is employed which has a magnetizing yoke formed by alternately disposing south and north poles of electromagnets to form a stripe configuration at intervals of about 1 mm to about 10 mm. A surface 15b' of the sheet member 15' opposite to a surface 15a' which is bonded to the flat plate 14' is brought into close contact with the magnetizing yoke. Then, electric power is supplied to the electromagnet so that the surface 15b' of the sheet member 15' is magnetized. The foregoing surface 15b' will be formed into an attracting surface of the vibration damper to the vibrating body of the magnetic layer.

Since the intervals between the south poles and the north poles of the magnetizer can be changed to adjust the magnetic force of the magnetized magnetic layer, it is preferable that the intervals are determined arbitrarily to be adaptable to the surface roughness of the vibrating body required to be damped and the thickness of the coating.

In addition to performing magnetization of the magnetic powder in the state where the sheet member 15' is in a sole state, the magnetization may be performed in a state of a flat member 11' (to be described later) formed by bonding the sheet member 15' to the flat plate 14'.

To bond the sheet member 15' to the reverse side 14b' (see Fig. 4A) of the flat plate 14' to laminate the same, surface treatment of the reverse side 14b' of the flat plate 14' must be performed. The surface treatment includes a surface degreasing treatment for removing oil components and the like to clean the bonding surface, a surface roughening process for improving the bonding force of the bonding agent to be applied and conversion treatment which is performed if necessary to further improve the rust proof and the bonding force.

If the flat plate 14' is the metal plate, the degreasing method may be a solvent degreasing method, an alkali degreasing method, electrolytic degreasing method, an ultrasonic degreasing method, a steam cleaning method or the like. The surface roughening method may be a sand blast method, a scotch bright method, a sand paper grinding method or the like. The conversion treatment is performed in a manner determined depending upon the type of the metal plate. When the metal plate is the cold rolled steel plate, a phosphate (for example, iron phosphate) film is formed. When the stainless steel is employed, an oxalate film or a zinc plate film or a copper plate film is formed. One or two or more processes of the above-mentioned degreasing treatment, the surface roughening process and the conversion process may be omitted if the metal plate is not contaminated considerably and depending upon the type of the polymer of the polymer viscoelastic material for forming the magnetic layer and upon the method of forming the polymer viscoelastic material. If the constraining plate is the synthetic resin plate, the degreasing treatment, the surface roughening treatment and the conversion treatment are performed similar to those which are performed when the constraining plate is the metal plate.

Then, a bonding agent is applied to the film formed on the bonding surface 14b' by the conversion treatment, and the bonding surface 14b of the flat plate 14' and the bonding surface 15a' of the sheet member 15' are bonded to each other so that the flat member 11' is formed.

The bonding agent may include a reactive acrylic bonding agent, a urea resin type bonding agent, melamine resin type bonding agent, a phenol resin type bonding agent, an epoxy resin type bonding agent, a vinyl acetate type bonding agent, a cyanoacrylate type bonding agent, a polyurethane type bonding agent, an α-olefin-maleic anhydride resin type bonding agent, an aquatic polymer-isocyanate type bonding agent, a deformed acrylic resin type bonding agent, an acrylic resin type emulsion bonding agent, an elastomer type hot melt bonding agent, a polyamide type hot melt bonding agent, a synthetic resin solvent type bonding agent and a synthetic rubber type latex bonding agent.

A heat-fusible synthetic resin film having a high melting point, such as polyamide rein, polyester resin, polyolefin resin or fluororesin, may be employed.

As an alternative to this, a solvent type acrylic resin adhesive, a solvent type rubber adhesive, an aqueous type rubber adhesive, an aqueous type acrylic adhesive, a silicon type adhesive, a hot melt type adhesive or a liquid hardening type adhesive may be employed. The solvent type acrylic resin adhesive may be resin containing natural rubber (NR), styrenebutadiene rubber (SBR) or isoprene rubber (IR). As the aqueous type rubber adhesive is exemplified by an adhesive containing latex, such as natural rubber latex, SBR latex, chloroprene or the like.

As an alternative to the "sheet member bonding method", the polymer viscoelastic material may directly formed into a sheet on the flat plate 14' to form the magnetic layer. The foregoing method is hereinafter called a "direct magnetic-layer forming method" which will now be described.

When the polymer viscoelastic material of the magnetic layer to be formed on the flat plate 14' is the rubber material and the flat plate 14' to be bonded is the metal plate, the direct magnetic-layer forming method is arranged in such a manner that, for example, phenol resin type primer is, by a coater or the like, applied to the film formed on the bonding surface 14b' of the flat plate 14' by the above-mentioned conversion treatment. Then, a baking process (at about 130°C to about 180°C for one to ten minutes in general) is performed so that a primer layer having a thickness of about 5 µm to about 20 µm is formed. Then, a non-vulcanized rubber compound is vulcanized and bonded to the primer layer by press molding or injection molding.

As an alternative to this, another direct magnetic-layer forming method may be employed in which when the metal flat plate 14' and the magnetic layer made of the rubber material are employed similarly to the above-mentioned method, for example, phenol type primer is, similarly to the above-mentioned method, subjected to the baking process so that a primer layer is formed on the film formed on the bonding surface 14b' of the flat plate 14' by the foregoing conversion treatment. Then, rubber solution prepared by dissolving non-vulcanized rubber in a solvent is applied to the primer layer by a coater or the like. Then, the rubber solution is dried (for example, about 60°C to about 130°C) so that the solvent is volatilized, and then vulcanization is performed on the dried surface (for example, about 160°C to about 240°C for about 5 minutes to about 30 minutes) so that the magnetic layer is formed (hereinafter called a "coating method").

Since the rubber solution undesirably runs or a long time is required to dry the solution or the solvent in the rubber solution is easily retained if the thickness of the rubber solution is large in the case of the coating method, the foregoing method is suitable when a magnetic layer having a thickness of about 0.5 mm or smaller. If the magnetic layer has a larger thickness, the sheet member bonding method is suitable to be employed.

As another magnetic-layer direct forming method, when the flat plate 14' is made of metal and the polymer viscoelastic material is the thermoplastic elastomer or the thermoplastic resin, a mold having an adequate gap is employed after the film has been formed on the bonding surface 14b of the metal flat plate 14' by the conversion treatment to press monolithic thermoplastic elastomer or the thermoplastic resin on the metal flat plate 14' at a temperature higher than the melting point of the thermoplastic elastomer or the like so that a sheet-shape member is molded. Then, the member is cooled down to a level lower than the melting point so that the magnetic layer is formed on the metal flat plate 14'. In this case, the bonding force of the thermoplastic elastomer or the thermoplastic resin is able to bond the magnetic layer to the metal flat plate 14'.

By any one of the above-mentioned various methods, a flat member 11' having the sheet member 15' laminated on the flat plate 14' as shown in Fig. 4C is formed. The underfloor vibration damper 12 of the rail vibration-damping unit 101 according to the first embodiment is different in only the grooves 16a' and 16b' being omitted. The other structures are the same as those of the flat member 11'.

Then, the flat member 11' is press-molded so that a body vibration damper 11'' as shown in Fig. 4D is formed. The body vibration damper 11" is formed by laminating a magnetic layer 15" on an asymmetrical constraining plate 14'' having a U-like cross section to have a first curved portion 11a", a second curved portion 11b" and a substantially inclined third portion 11c". A groove 16a" extending in the lengthwise direction of the rail R is formed on the surface of the constraining plate 14" in the bent connection portion between the first portion 11a" and the second portion 11b". A groove 16b" extending in the lengthwise direction of the rail R is fof a concave portion near the intermediate portion between the side surface Rb of the body of the rail R and the top slope of the inclined surface Rc of the upper surface of the bottom plate of the rail R. The above-mentioned curvature radius of a concave portion near the intermediate portion between the jaw portion Ra in the lower portion of the head portion of the rail R and the side surface Rb of the body of the rail R and the curvature radius of a concave portion near the intermediate portion between 11a" and the second portion 11b" is made to be smaller than the curvature radius of a concave portion near the intermediate portion between the jaw portion Ra in the lower portion of the head portion of the rail R and the side surface Rb of the body of the rail R. Moreover, the curvature radius of the bent surface of the magnetic layer 15" of the body vibration damper 11" near the intermediate portion between the second portion 11b" and the third portion 11c" is made to be smaller than the curvature radius of a concave portion near the intermediate portion between the side surface Rb of the body of the rail R and the top slope of the inclined surface Rc of the upper surface of the bottom plate of the rail R. The above-mentioned curvature radius of a concave portion near the intermediate portion between the jaw portion Ra in the lower portion of the head portion of the rail R and the side surface Rb of the body of the rail R and the curvature radius of a concave portion near the intermediate portion between the side surface Rb of the body of the rail R and the top slope of the inclined surface Rc of the upper surface of the bottom plate of the rail R correspond to the first curvature radius.

The surface shape of the first portion 11a" of the magnetic layer 15" of the body vibration damper 11'' is formed to be substantially the same as the surface shape of the concave surface of the jaw portion Ra in the lower portion of the head portion of the rail R. The surface shape of the second portion 11b" is formed to be the same as the surface shape of the concave surface of the side surface Rb of the body of the rail R. The surface shape of the third portion 11c" is formed to be the same as the surface shape of the concave surface of the inclined surface Rc of the top surface of the bottom plate of the rail R.

The constraining plate 14" of the body vibration damper 11" is arranged to have thicknesses at the groove 16a" and the groove 16b" thereof are made to be smaller than those of the other portions. Thus, the groove 16a" and the groove 16b" are the weak cross section portions with respect to bending force as compared with the other adjacent portions.

A method of attaching the rail vibration-damping unit 101 according to the first embodiment to the rail R will now be described.

In the case of the underfloor vibration damper 12, the surface of the magnetic layer (not shown) of the underfloor vibration damper 12 made of the magnetic rubber is brought into contact with the lower surface Re (see Fig. 1) of the bottom plate of the rail R so as to be attracted to the lower surface Re of the bottom plate of the rail R by dint of the magnetic force.

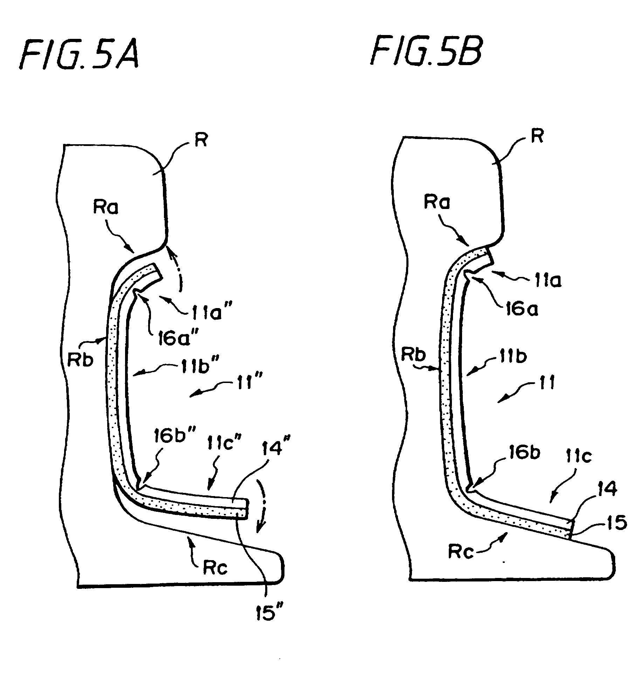

In the case of the body vibration damper 11", as shown in Fig. 5A, the surface of a portion adjacent to the second portion 11b" of the magnetic layer 15" of the body vibration damper 11" made of the magnetic rubber or the like is brought into contact with the side surface Rb of the body of the rail R so that the foregoing portion is attracted to the side surface Rb of the body of the rail R by dint of the magnetic force. In this case, the curvature radius of the bent surface near the intermediate portion between the first portion 11a" of the body vibration damper 11" and the second portion 11b" is made to be smaller than the curvature radius of a concave portion near the intermediate portion between the jaw portion Ra in the lower portion of the head portion of the rail R and the side surface Rb of the body of the rail R. Moreover, the curvature radius of the bent surface near the intermediate portion between the second portion 11b" of the body vibration damper 11" and the third portion 11c" of the same is made to be smaller than the curvature radius of a concave portion near the intermediate portion between the side surface Rb of the body of the rail R and the top slope of the inclined surface Rc of the upper surface of the bottom plate of the rail R. Therefore, the first portion 11a" of the magnetic layer 15" of the body vibration damper 11" is not brought into contact with the concave surface of the jaw portion Ra of the lower portion of the head portion of the rail R and thus allowed to float from the same. Also the third portion 11c" is not brought into contact with the inclined surface Rc of the upper surface of the bottom plate of the rail R and thus allowed to flat from the same.

Then, the portion in the vicinity of the second portion 11b" attracted to the side surface Rb of the body of the rail R is pressed by a tool or a jig (not shown) to cause bending force to act on the leading end of the first portion 11a" in a direction indicated with a thick alternate long and short dash line shown in Fig. 5A by using a tool or a jig (not shown). Since the groove 16a" has small bending strength as compared with the adjacent portions, the groove 16a" is plastically deformed when the foregoing bending force is larger than a certain value. As a result, the first portion 11a" is rotated in a direction indicated by a thick alternate long and short dash line shown in Fig. 5A. Thus, the curvature radius of the magnetic layer 15" near the bent portion at the intermediate portion between the first portion 11a" and the second portion 11b" is enlarged. Since the surface shape of the first portion 11a" is made to be substantially the same as the shape of the concave surface of the jaw portion Ra of the lower portion of the head portion of the rail R, substantially the overall surface of the first portion 11a" is brought into contact with the curved surface Ra and attracted to the curved surface Ra by dint of the magnetic force of the magnetic layer 15". As a result, the first portion 11a" is formed into a curved shape which is closely in contact with the jaw portion Ra of the lower portion of the head portion of the rail R, as shown in Fig. 5B.

Similarly, the portion in the vicinity of the second portion 11b" attracted to the side surface Rb of the body of the rail R is pressed by a tool or a jig (not shown) to cause bending force to act on the leading end of the third portion 11c" in a direction indicated with a thick alternate long and short dash line shown in Fig. 5A by using a tool or a jig (not shown). Since the groove 16b" has small bending strength as compared with the adjacent portions, the groove 16b'' is plastically deformed when the foregoing bending force is larger than a certain value. As a result, the third portion 11c" is rotated in a direction indicated by a thick alternate long and short dash line shown in Fig. 5A. Thus, the curvature radius of the magnetic layer 15'' near the bent portion at the intermediate portion between the second portion 11b" and the third portion 11c" is enlarged. Since the surface shape of the third portion 11c" is made to be substantially the same as the shape of the inclined surface Rc of the top surface of the bottom plate of the rail R, substantially the overall surface of the third portion 11c" is brought into contact with the inclined surface Rc of the top surface of the bottom plate of the rail R. As a result, the third portion 11c" is attracted to the inclined surface Rc by dint of the magnetic force of the magnetic layer 15" so as to be formed into a curved shape which is closely in contact with the inclined surface Rc of the top surface of the bottom plate of the rail R, as shown in Fig. 5B.

After the constraining plate 14" of the body vibration damper 11" has been plastically deformed, the surface shape of the deformed magnetic layer 15 coincides with the shape of the concave surface of the side portion of the rail R. Thus, overall surface of the deformed magnetic layer 15 is, as shown in Fig. 5B, brought into close contact with the side portion of the rail R by dint of the magnetic force so that the body vibration-damper 11 shown in Fig. 1 is formed.

The foregoing method is arranged in such a manner that the surface in the vicinity of the second portion 11b" of the magnetic layer 15" of the body vibration damper 11" is initially attracted to the side surface Rb of the body of the rail R by the magnetic force to press the second portion 11b" to bring the first portion 11a" and the third portion 11c" into close contact with the rail R by dint of the plastic deformation. Another method may be employed in which the surface adjacent to the third portion 11c" of the magnetic layer 15" of the body vibration damper 11" is initially attracted to the top surface Rc of the bottom plate of the rail R by dint of the magnetic force; the third portion 11c" is pressed to plastically deform the second portion 11b" to be brought into close contact with the rail R; and the first portion 11a" is plastically deformed so as to be brought into close contact with the rail R.

Although the above-mentioned method is arranged in such a manner that the plastic deformation of the body vibration damper 11" using the grooves 16a" and 16b" is performed by compressing the portion in the vicinity of the second portion 11b" of the body vibration damper 11" and by bending the first portion 11a" and the third portion 11c" of the body vibration damper 11", another method may be employed to perform the plastic deformation. For example, a tool or a jig (not shown) may be used to perform "caulking" in a portion in the vicinity of the grooves 16a" and 16b'' of the body vibration damper 11''. As an alternative to this, any one of compressing, bending and caulking or their combination may be employed to plastically deform the body vibration damper 11''.

After the body vibration-damper 11 has been attached to each of the right and left sides of the rail R as described above, the separation stopper 13 is, as shown in Fig. 1, placed between the body vibration-damper 11 and the underfloor vibration damper 12. Thus, attachment of the rail vibration-damping unit 101 is completed. Since the rail vibration-damping unit 101 according to this embodiment has the structure that the groove 16a'' and the like are provided for the body vibration damper 11'' and the surface shape of the magnetic layer 15'' is made substantially coincide with the shape of the side surface of the body of the rail R by the plastic deformation, the surface of the magnetic layer 15" can easily follow and can be attracted magnetically even if the shape of the side surface of the body of the rail R is slightly deformed attributable to a manufacturing error, a damage or rust.

### (2) Second Embodiment

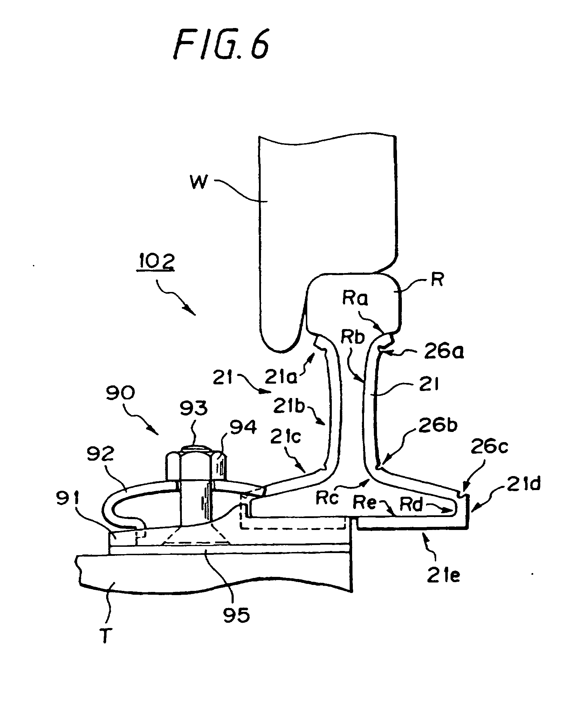

Fig. 6 is a cross sectional view showing the structure of a rail vibration damper according to a second embodiment of the magnetic-vibration-damper of a composite type. Referring to Fig. 6, the right-hand portion of the rail R shows the structure between the sleepers T and the left-hand portion of the rail R shows the structure of the sleeper T at the position of the rail clamper unit 90.

The structures of the rail R and the rail clamper unit 90 are the same as those according to the first embodiment. Similarly to the first embodiment, the rail R corresponds to the vibrating body or the columnar body.

As shown in Fig. 6, a rail vibration damper 102 has two half dampers 21 to be attached to the right and left side surfaces of the body of the rail R. The right and left side surfaces Rb of the body of the rail R, the right and left upper surfaces Rc of the bottom plate and the lower surface Re of the bottom plate correspond to the vibrating surface.

The half damper 21 is formed by a member having an S-like cross section. The half damper 21 has a first curved portion 21a arranged to be in close contact with the jaw portion Ra of the lower portion of the head portion of the rail R, a second curved portion 21b to be in close contact with the side surface Rb of the body of the rail R, a substantially inclined third portion 21c to be in close contact with the top surface Rc of the bottom plate of the rail R, a substantially vertical fourth portion 21d to be in close contact with the side surface Rd of the bottom plate of the rail R and a substantially flat fifth portion 21e to be in close contact with the lower surface Re of the bottom plate of the rail R. The leading end of the first portion 21a extends to a position at which it does not obstruct the rolling of the wheel W of a train which runs on the rail R. A groove 26a extending in the lengthwise direction of the rail R is formed in the surface of the constraining plate in the bent connection portion between the first portion 21a and the second portion 21b. A groove 26b extending in the lengthwise direction of the rail R is formed in the surface of the constraining plate in the bent connection portion between the second portion 21b and the third portion 21c. A groove 26c extending in the lengthwise direction of the rail R is formed in the surface of the constraining plate in the bent connection portion between the third portion 21c and the fourth portion 21d. The length of the half damper 21 in the lengthwise direction of the rail R may be determined arbitrarily if it is shorter than the distance between ends of two adjacent sleepers T.

When the half damper 21 is attached to each of the right and left sides of the rail R as described above, attachment of the rail vibration damper 102 is completed. Since the rail vibration damper 102 is magnetically attracted to the side and bottom portions of the rail R, the separation stopper 13 of the rail vibration-damping unit 101 is not required to prevent separation from the rail R. Since the rail vibration damper 102 has the groove 26a and the like provided for the half damper 21 to make substantially coincide the surface shape of the material with the shape of the side surface of the body of the rail R by plastic deformation, the magnetic layer can easily be follow slight deformation of the shape of the side surface of the body of the rail R even if the shape of the side surface of the body of the rail R is slightly changed attributable to a manufacturing error, damage or rust and thus it can magnetically be attracted to the rail R.

### (3) Third Embodiment

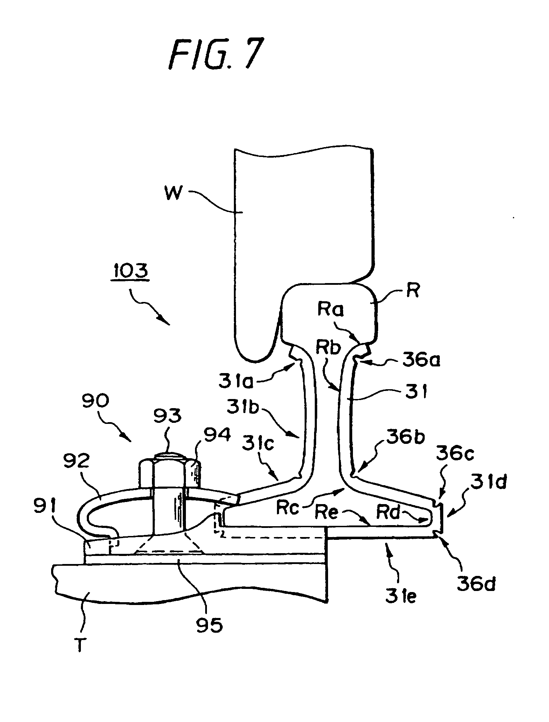

Referring to Fig. 7, the right-hand portion of the rail R shows the structure at an intermediate position between sleepers T and the left-hand portion of the rail R shows the structure of the sleeper T at the position of the rail clamper unit 90.

The structures of the rail R and the rail clamper unit 90 are the same as those according to the first embodiment. Similarly to the first embodiment, the rail R corresponds to the vibrating body or the columnar body.

As shown in Fig. 7, the rail vibration damper 103 is formed by a one-piece damper 31 which is integrally attached to the right and left side surfaces and the lower surface of the bottom plate of the rail R. The right and left body side surfaces Rb, the right and left upper surfaces Rc of the bottom plate and the lower surface Re of the bottom plate of the rail R correspond to the vibrating surface.

The one-piece damper 31 is formed by a member having an inverted Ω-shape cross section formed symmetrically. The one-piece damper 31 has first curved portions 31a to be in close contact with the jaw portion Ra of the lower portion of the head portion of the rail R, second curved portions 31b to be in close contact with the side surface Rb of the body of the rail R, substantially inclined third portions 31c to be in close contact with the top surface Rc of the bottom plate of the rail R, substantially vertical fourth portions 31d to be in close contact with the side surface Rd of the bottom plate of the rail R and substantially-planar fifth portion 31e to be in close contact with the lower surface Re of the bottom plate of the rail R. The leading end of the first portion 31a extends to a position at which it does not obstruct rolling of the flange of the wheel W of a train which runs on the rails R. A groove 36a extending in the lengthwise direction of the rail R is formed in the surface of the constraining plate in the bent connection portion between the first portion 31a and the second portion 31b. A groove 36b extending in the lengthwise direction of the rail R is formed in the surface of the constraining plate in the bent connection portion between the second portion 31b and the third portion 31c. A groove 36c extending in the lengthwise direction of the rail R is formed in the surface of the constraining plate in the bent connection portion between the third portion 31c and the fourth portion 31d. A groove 36d extending in the lengthwise direction of the rail R is formed in the bent connection portion between the fourth portion 31d and the fifth portion 31e. The length of the one-piece damper 31 in the lengthwise direction of the rail R may, similarly to that of the rail vibration damper 102 according to the second embodiment, arbitrarily be selected if it is shorter than the distance between ends of adjacent sleepers T.

When the overall surface of the magnetic layer of the one-piece damper 31 is attached to each of the right and left sides of the rail R as described above, the attachment of the rail vibration damper 103 is completed. Since the rail vibration damper 103 is magnetically attracted to the side and bottom portions of the rail R to surround the rail R, separation from the rail R can be prevented without the separation stopper 13 for the rail vibration-damping unit 101. Moreover, the rail vibration damper 103 has the one-piece damper 31 provided with the groove 36a and the like to make substantially coincide the surface shape of the magnetic layer with the shape of the side surface of the body of the rail R. Therefore, the magnetic layer can easily follow slight deformation of the shape of the side surface of the body of the rail R even if the shape of the side surface of the body of the rail R is slightly changed attributable to a manufacturing error, damage or rust and thus it can be magnetically attracted to the rail R.

The rail vibration damper according to the third embodiment may be realized another structure. For example, another structure may be employed in which the one-piece damper 31 shown in Fig. 7 is formed into a cut portion by removing the constraining plate in a region from the groove 36c to the groove 36d to provide two constraining plates. In this case, the cut portion is formed by only the magnetic layer made of magnetic rubber or the like. Therefore, free rotation is permitted and thus rotation for magnetically attracting the cut portion to the rail R by dint of magnetic force can significantly easily be performed.

### (4) Fourth Embodiment

The present invention can be realized with a structure other than those according to the foregoing embodiments.

Although the thin grooves are described as the weak cross section portion of the constraining plate according to each of the above-mentioned embodiments, another structure may be employed in which thin slit-shape openings are formed and the portions of the constraining plate corresponding to the openings are removed. Also the positions of the openings may be determined such that one opening is formed in the central portion or a plurality of openings are intermittently formed.

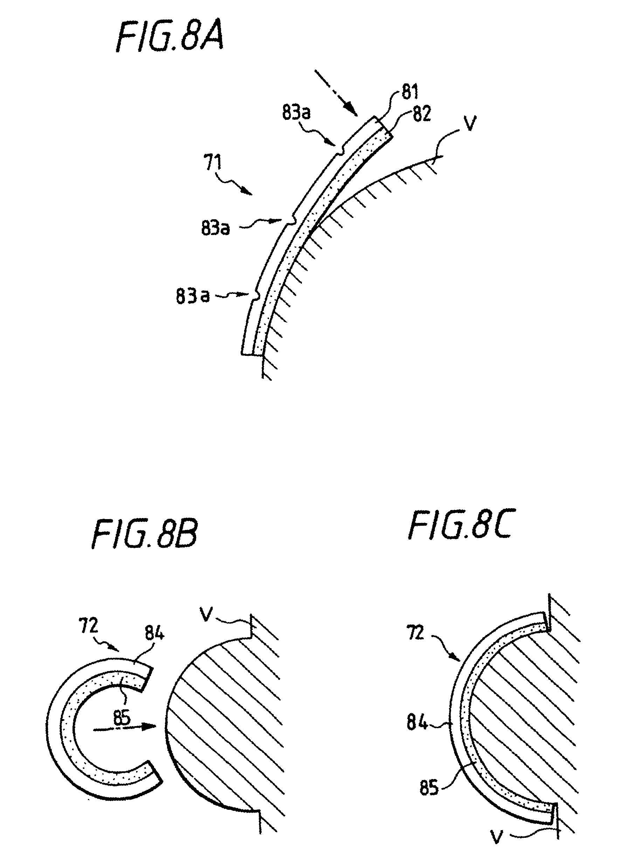

The first to third embodiments have been described about the railway vibration damper. Since the railway rail R has the side surface of the concave surface of the body thereof which acts as the vibrating surface, the curvature radius of the magnetic layer of the magnetic-vibration-damper of a composite type for the body of the rail is made to be smaller than the curvature radius of the concave surface. Moreover, the constraining plate of the magnetic-vibration-damper of a composite type has the weak cross section portion, such as the groove, which enables the constraining plate to plastically be deformed in the direction in which the curvature radius of the magnetic layer is enlarged. However, the present invention may be applied to a vibrating body V having a convex curved surface as shown in Fig. 8A. In this case, the curvature radius of a magnetic layer 82 of a composite type magnetic-vibration-damper of a composite type 71 is made to be larger than the curvature radius of the convex curved surface. Moreover, a weak cross section portion (a groove 83a) capable of plastically deforming a constraining plate 81 into a direction (in a direction indicated by a thick alternate long and short dash line shown in Fig. 8A) in which the curvature radius of the magnetic layer 82 is reduced is formed in a constraining plate 81 of the magnetic-vibration-damper of the composite type 71.

The present invention can be realized with another structure other than those of the above-mentioned embodiments.

Each of the above-mentioned embodiments has been described about the magnetic-vibration-damper of a composite type arranged to magnetically be attracted to a vibrating surface of a vibrating body made of a ferromagnetic material, such as steel, and formed by surfaces including a curved surface and structured in such a manner that the material for forming the constraining plate has elasticity and plasticity; plastic deformation of the weak cross section portion is used to deform the constraining plate to make substantially coincide the surface shape of the magnetic layer with the shape of the curved vibrating surface; the magnetic force of the magnetic powder in the magnetic layer is used to cause substantially the overall surface of the magnetic layer to be attracted to the vibrating surface to attach the magnetic-vibration-damper of a composite type to the vibrating surface to cause vibration energy from the vibrating body to be lost in the magnetic layer constrained by the constraining plate and cause the same to be lost by dint of sliding friction on the boundary between the vibrating surface and the magnetic layer so that vibrations are damped.

As an alternative to this, a magnetic-vibration-damper of a composite type may be employed which is arranged to magnetically be attracted to a vibrating surface of a vibrating body made of a ferromagnetic material, such as steel, and formed by surfaces including a curved surface and structured in such a manner that the material for forming the constraining plate has elasticity and tenacity in place of the elasticity and the plasticity; elastic repulsion force of the constraining plate is used to join the magnetic layer to the vibrating surface to make substantially coincide the surface shape of the magnetic layer to the shape of the vibrating surface; the magnetic force of the magnetic powder in the magnetic layer is used to cause substantially the overall surface of the magnetic layer to be attracted to the vibrating surface to attach the magnetic-vibration-damper of a composite type to the vibrating surface to cause vibration energy from the vibrating body to be lost in the magnetic layer constrained by the constraining plate and cause the same to be lost by dint of sliding friction on the boundary between the vibrating surface and the magnetic layer so that vibrations are damped. The "tenacity" means a characteristic capable of absorbing energy generated attributable to elastic deformation. A fact that the "large tenacity" means a flexible characteristic with which breakage cannot easily take place by somewhat elastic deformation. A fact that the "small tenacity" means a brittle characteristic with which breakage easily takes place even with slight deformation.

As an alternative to this, a magnetic-vibration-damper of a composite type 72 may be employed which is, as shown in Fig. 8B, structured to have a constraining plate 84 having elasticity and tenacity and arranged in such a manner that the curvature radius of a magnetic layer 85 corresponding to the vibrating surface is made to be smaller than the curvature radius of the vibrating surface in a case where the vibrating surface of vibrating body V made of a ferromagnetic material is in the form of a convex curve having a second curvature radius. When the above-mentioned structure is employed and after which the constraining plate 84 is pushed inwards in a direction indicated by a thick alternate long and short dash line shown in Fig. 8B and the elastic repulsion of the constraining plate 84 is used to join the magnetic layer 85 to the vibrating surface of the concave curve, the elastic repulsion of the constraining plate 84 deforms the magnetic layer 85 so as to be pressed against the vibrating surface in a state where the shape is made substantially coincide with the shape of the vibrating surface as shown in Fig. 8C. Then, the magnetic layer 85 is attracted to the vibrating surface by dint of the magnetic force thereof. Thus, separation can be prevented. Even if the shape of the vibrating surface is somewhat changed, the elasticity of the constraining plate 84 causes the shape of the magnetic layer 85 to easily follow the change and the magnetic attraction can be maintained.

The weak cross section portions including the grooves 16a, 16b, 26a to 26c, 36a to 36d and 83a and the openings according to the foregoing embodiments correspond to the adjustment means arranged to be deformed to make substantially coincide the surface shape of the magnetic layer with the shape of the vibrating surface. Also the constraining plate 84 of the magnetic-vibration-damper of a composite type 72 structured to have elasticity and tenacity and provided with a predetermined curvature radius corresponds to the adjustment means.

### (5) Fifth Embodiment

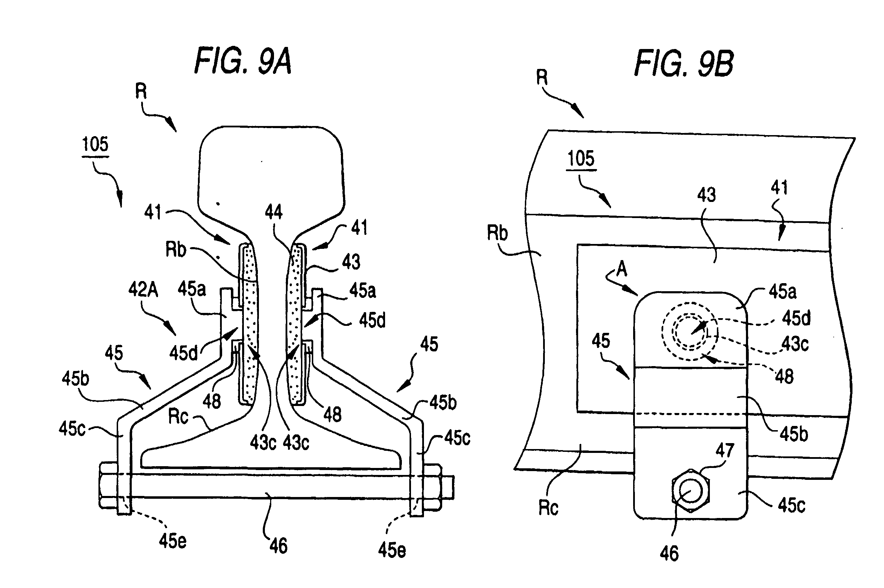

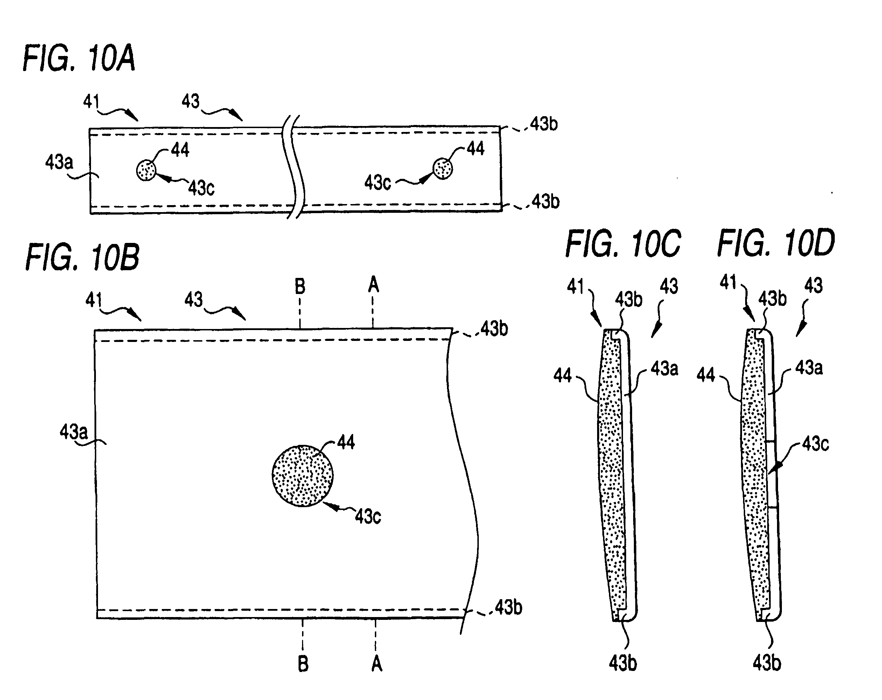

Figs. 9A and 9B are diagrams showing the structure of a rail vibration-damping unit according to a fifth embodiment. Fig. 9A is a cross sectional view, and Fig. 9B is a side view. Figs. 10A to 10D are diagrams showing a further detailed structure of the magnetic-vibration-damper of a composite type for the rail vibration-damping unit shown in Figs. 9A and 9B. Fig. 10A is a side view when viewed from a position adjacent to the constraining plate, Fig. 10B is an enlarged view of an end portion in the lengthwise direction shown in Fig. 10A, Fig. 10C is a cross sectional view taken along line A-A shown in Fig. 10B and Fig. 10D is a cross sectional view taken along line B-B shown in Fig. 10B.

As shown in Figs. 9A and 9B, the rail vibration-damping unit 105 comprises magnetic-vibration-dampers of a composite type 41 respectively attached to two side surface Rb of the body of the rail R extending in the lengthwise direction of the rail R and a vibration-damper restraining device 42 for restraining movement of the magnetic-vibration-dampers of a composite type 41.

As shown in Figs. 10A to 10D, the magnetic-vibration-damper of a composite type 41 is formed by laminating a constraining plate 43 made of a steel plate or the like, which is an elastic material and formed into an elongated member obtained by bending two shorter directional ends in the direction of the thickness thereof; and a magnetic layer 44 formed by magnetizing magnetic rubber or the like, which is a polymer viscoelastic material containing magnetic powder.

The constraining plate 43 has a plate-like portion 43a extending in the lengthwise direction thereof and end portions 43b formed by bending two shorter directional ends thereof in the direction of the thickness thereof (see Figs. 10C and 10D).

Engagement openings 43c each having a circular cross sectional are formed adjacent to two lengthwise directional ends of the plate-like portion 43a (see Figs. 10A, 10B and 10D).

The magnetic layer 44 has a surface formed into a convex shape. The convex surface is formed to coincide with the concave surface of the side surface Rb of the body of the rail R (Fig. 9A).

The rear surface of the magnetic layer 44 is formed into a shallow groove shape formed by the plate-like portion 43a and the end portions 43b of the constraining plate 43 (see Figs. 10C and Fig. 10D). The rear surface of the magnetic layer 44 is exposed to the outside through the engagement openings 43c of the constraining plate 43 (see Figs. 10A, 10B and 10D).

The vibration-damper restraining device 42, as shown in Figs. 9A and 9B, has two restraining members 45, a bolt 46 for connecting the restraining members 45 to each other, a nut 47 which can be joined to the bolt 46 by a thread and a spacer 48 which is inserted between the restraining member 45 and the magnetic-vibration-damper of a composite type 41.

The restraining members 45 has two vertical plate portions 45a and 45c extending in the vertical direction when viewed in Figs. 9A and 9B and an inclined portion 45b for establishing the connection between the vertical plate portions 45a and 45c, the restraining members 45 being formed into a flat and linear S-shape. The vertical plate portion 45a has an engagement convex portion 45d formed into a vertical and short cylindrical shape over the surface of the vertical plate portion 45a. The vertical plate portion 45c has a bolt insertion opening 45e having a circular opening, the diameter of which is similar to that of the outer shape of the bolt 46.

When the vertical plate portion 45c has a small thickness, a cylindrical member having an inner diameter similar to the outer diameter of the bolt 46 is formed continuously to the bolt insertion opening 45e of the vertical plate portion 45c to permit the vibration-damper restraining device 42 to be slid in the lengthwise direction of the bolt 46.

As a result of the above-mentioned structure, when the convex surface of the magnetic layer 44 is brought into close contact with the side surface Rb of the rail body in such a manner that the lengthwise direction of the magnetic-vibration-damper of a composite type 41 coincides with the lengthwise direction of the rail R, the magnetic force of the magnetic layer 44 cause the magnetic-vibration-damper of a composite type 41 to magnetically be attracted to the side surface Rb of the rail R. Similarly, another magnetic-vibration-damper of a composite type 41 is magnetically attracted to the same position of another side surface of the body side surface Rb of the rail R.

Then, the annular spacer 48 is inserted into the engagement opening 45c of the magnetic-vibration-damper of a composite type 41, and then the engagement convex portion 45d of the restraining members 45 is inserted into the inside opening of the spacer 48. Then, the vertical plate portion 45c of each restraining members 45 is placed to face downwards, and then the bolt 46 is inserted into the bolt insertion opening 45e toward the other bolt insertion opening 45e, after which the nut 47 is joined by the thread to the bolt 46 and clamped (see Figs. 9A and 9B).

Since the constraining plate 43 disposed on the rear of the magnetic layer 44 and made of steel is, in the bent portion 43b, bent toward the magnetic layer 44 at a position near a shorter directional end of the magnetic-vibration-damper of a composite type 41, that is, the upper end or the lower end of the magnetic-vibration-damper of a composite type 41 when viewed in Figs. 9A and 9B, a magnetic shield effect is obtained. Therefore, iron powder generated attributable to the friction between the wheels (not shown) of a train and the rail R and iron powder generated from brake wheels made of cast iron are attracted to the shorter directional ends of the magnetic-vibration-damper of a composite type 41. Thus, contamination and rust can be prevented.

In the case of the magnetic-vibration-damper of a composite type comprising the constraining plate 43 for which the bent portion 43b is not provided, a non-magnetized portion is provided at each of two shorter directional ends of the magnetic layer 44. Thus, iron powder is not attracted to the end portions and thus contamination and rust can be prevented.

At least two or more vibration-damper restraining devices 42 must be disposed at each of the two magnetic-vibration-dampers of a composite type 41 disposed on the same positions of the side surface Rb of the rail body.

### (6) Sixth Embodiment

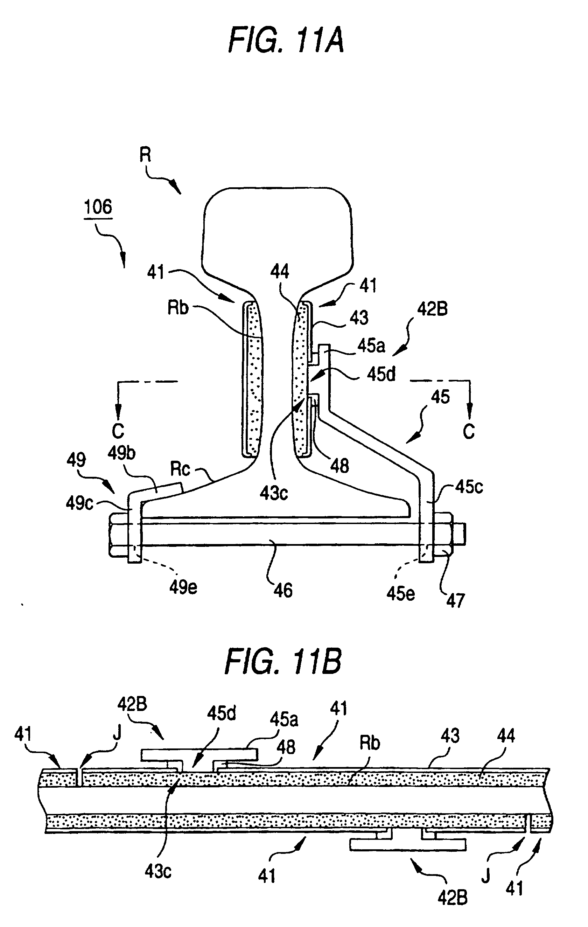

Figs. 11A, 11B, 12 and 13 are diagrams showing the structures of rail vibration-damping units according to a sixth embodiment and having different vibration-damper restraining devices.

Fig. 11A is a cross sectional view showing a rail vibration-damping unit having a vibration-damper restraining device 42B. Fig. 11B is a cross sectional view taken along line C-C.

The vibration-damper restraining device 42B shown in Fig. 11A has one restraining member 45, a joining member 49, a bolt 46 for establishing the connection between the restraining member 45 and the joining member 49, a nut 47 which can be received by the bolt 46 by a thread and a spacer 48 inserted into a position between the restraining member 45 and the magnetic-vibration-damper of a composite type 41.

As shown in Fig. 11B, the magnetic-vibration-damper of a composite type 41 can be joined to an arbitrary position on the side surface Rb of the rail body on either side of the rail R.

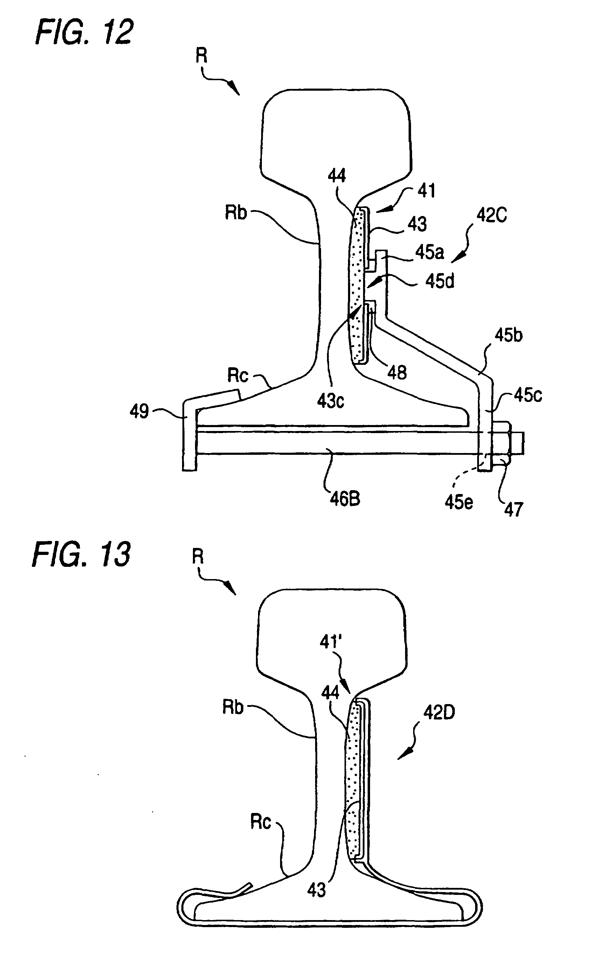

Fig. 12 is a cross sectional view showing the structure of a rail vibration-damping unit having a vibration-damper restraining device 42C.

The vibration-damper restraining device 42C has a structure that the joining member 49 shown in Fig. 11A is joined to the head portion of the bolt 46 by welding or the like so that a bolt 46B having a joining member is obtained.

Fig. 13 is a cross sectional view showing the structure of a rail vibration-damping unit having a vibration-damper restraining device 42D.

The vibration-damper restraining device 42D is integrally formed by spring steel, such as stainless steel.

A magnetic-vibration-damper of a composite type 41' shown in Fig. 13 has a different shape in that the engagement opening 43c is not provided for the constraining plate 43.

### (7) Seventh Embodiment

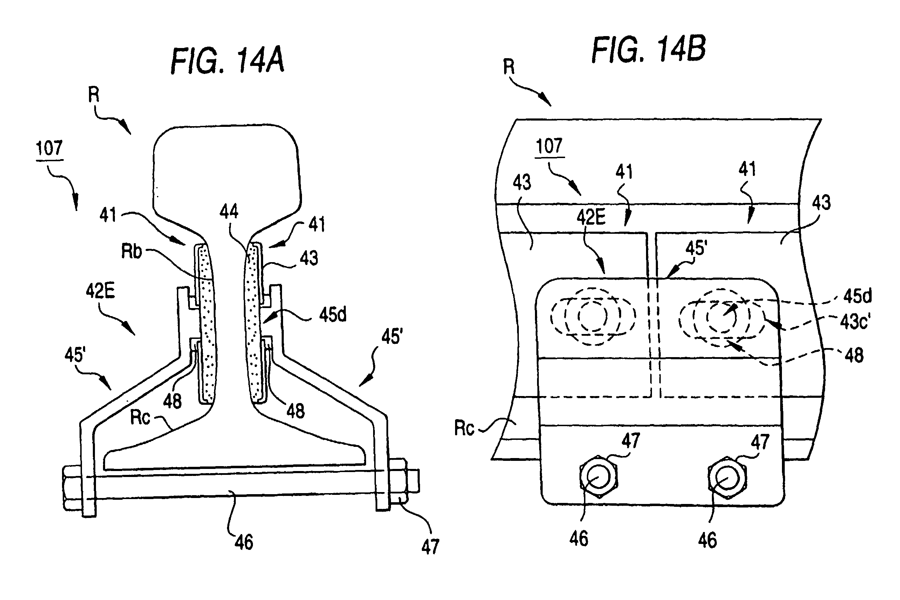

Figs. 14A and 14B are diagrams showing the structure of a rail vibration-damping unit 107 according to a seventh embodiment. Fig. 14A is a cross sectional view, and Fig. 14B is a side view.

The rail vibration-damping unit 107 has magnetic-vibration-dampers of a composite type 41 each of which is formed into an elongated shape extending in the lengthwise direction of the rail R and joined to the side surface Rb of the body of the rail R and a vibration-damper restraining device 42E for restraining movements of the magnetic-vibration-dampers of a composite type 41.

As shown in Fig. 14B, the vibration-damper restraining device 42E is able to simultaneously restrain two magnetic-vibration-dampers of a composite type 41 adjacent in the lengthwise direction of the rail R.

Since the constraining plate 43 of the magnetic-vibration-damper of a composite type 41 has an engagement opening 43c' having an oblong cross section, combination of the engagement opening 43c' having the oblong cross section and the engagement convex 45d is able to absorb expansion or contraction attributable to an error or thermal expansion if the lengthwise directional length of the magnetic-vibration-damper of a composite type 41 or the position of the engagement opening 43c' has a manufacturing error.

### (8) Eighth Embodiment

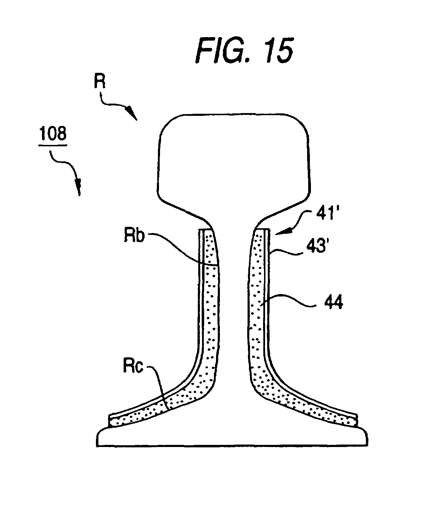

Fig. 15 is a cross sectional view showing the structure of a rail vibration-damping unit 108 according to an eighth embodiment.

The rail vibration-damping unit 108 according to the eighth embodiment has two magnetic-vibration-dampers of a composite type 41' each of which is formed into a bent and elongated shape extending in the lengthwise direction of the rail R and which are joined in regions from the side surface Rb of the rail body to the upper surface Rc of the bottom.

The rail vibration-damping unit 108 according to the eighth embodiment is different from those according to the foregoing embodiments in that the magnetic-vibration-damper of a composite type 41' is bent so as to be joined to the side surface Rb of the body of the rail R and the upper surface Rc of the bottom of the same. Since a larger area of the rail can be covered, the effect of reducing vibrations can furthermore be improved. Moreover, the various vibration-damper restraining devices according to the foregoing embodiments can be joined (not shown).

An example of a method of manufacturing the above-mentioned magnetic-vibration-damper of a composite type will now be described with reference to Fig. 15.

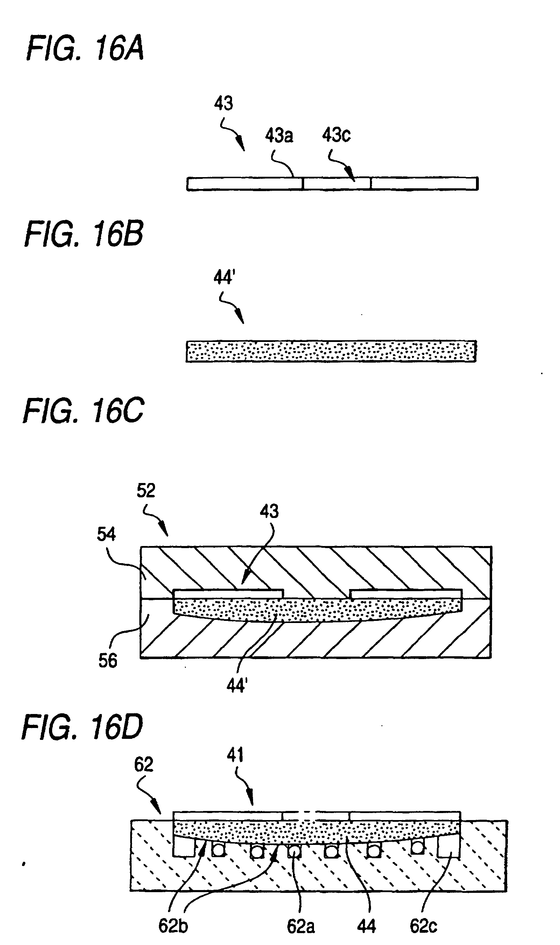

The constraining plate 43 applied with a bonding agent to the reverse side thereof and having the engagement openings 43c shown in Fig. 16A and the sheet member 44' containing magnetic powder from which the magnetic layer 44 shown in Fig. 16B will be formed by laminating into a laminate having a required convex shape by a heat compression molding apparatus 52 shown in Fig. 16C. The heat compression molding apparatus 52 has an upper mold 54 and a lower mold 56, the vertical positions of which are arbitrarily be determined.

The thus-molded non-magnetized magnetic-vibration-damper of a composite type 41 is brought into close contact with a magnetizing yoke apparatus 62 (see Fig. 16D) having a concave shape corresponding to the convex shape of the magnetic-vibration-damper of a composite type 41. Then, a large electric current which alternately flows in opposite directions is instantaneously supplied to each conductive line 62a by a capacitor so that the magnetic-vibration-damper of a composite type 41 is magnetized.

The magnetizing yoke apparatus 62 has conductive lines 62a and yoke portions 62b disposed alternately. In the yoke portion 62b, magnetization to the north pole and south pole is performed. Since spaces 62c are formed at the right and left ends, non-magnetized portions are formed at the two ends. Thus, iron powder is not attracted to the shorter directional ends of the magnetic-vibration-damper of a composite type 41'. Thus, an effect can be attained in that contamination and rust can be prevented.

The bent magnetic-vibration-damper of a composite type 41' shown in Fig. 15 is manufactured by a method in which the bent constraining plate 43' and the sheet member 44' containing magnetic powder are compression-molded with heat by using molds having the concave shape of the side surface Rb of the body of the rail R and the upper surface Rc of the bottom of the same.

It should be noted that the present invention is not limited to the above-mentioned embodiments. The above-mentioned embodiments have been described as examples and any structure having substantially the same structure as that of the technical ideas described in the appended claims is included in the scope of the present invention if a similar operation and effect can be obtained.

Although the above-mentioned embodiments have been described about the magnetic-vibration-damper of a composite type having the structure in which one constraining plate and one magnetic layer are laminated, the present invention is not limited to this. Another magnetic-vibration-damper of a composite type may be employed in which, for example, two or more constraining plates each having a structure similar to that according to each of the above-mentioned embodiments and two or more magnetic layer each having a structure similar to that according to each of the above-mentioned embodiments are laminated.

As described above and useful for the method according to the present invention, the adjustment means may be deformed to make substantially coincide the surface shape of the magnetic layer with the shape of the vibrating surface even if the vibrating body has a curved vibrating surface. Therefore, even if the curved surface is somewhat changed, the magnetic layer is able to easily follow the change and the magnetic attraction can be maintained.

Since the magnetic-vibration-damper of a composite type is employed, the temperature dependency of the internal loss vibrating effect of vibration energy can be moderated. Thus, a satisfactory vibration damping performance can be exhibited in a wide temperature range.

The method of the present invention employs one or a plurality of constraining plates made of a material having a Young's modulus of elasticity of 29,4 x 10⁸ pascal (300 kgf/mm²) or higher; and one or a plurality of magnetic layers made of a polymer viscoelastic material having magnetic powder magnetized to have a residual magnetic flux density of about 2.5 x 10⁻³ tesla (25 gausses) to about 1.5 tesla (15,000 gausses), laminated on the constraining plates, each having a surface shape which coincides with the curved vibrating surface and enabled to be attracted to the vibrating surface (Rb, Rc). Therefore, the structure can be magnetically attracted to a vibrating surface of a vibrating body made of a ferromagnetic material and having a surface including a curved surface to reduce the vibrations.

The foregoing description has been presented for purposes of illustration and description. It is not intended to be exhaustive or to limit the invention to the precise form disclosed, and modifications and variations are possible within the scope of the claims. The embodiments were chosen and described in order to explain the principles of the invention and its practical application to enable one skilled in the art to utilize the invention in various embodiments and with various modifications as are suited to the particular use contemplated.

## Claims

1. A method of damping vibrations of a vibrating surface (Ra, Rb, Rc) of a vibrating body (R; V) made of a ferromagnetic material and including a curved surface, said method comprising the steps of:
using one or plural layers of magnetic-vibration-damper of a composite type (11; 21; 31; 71; 72) having one or a plurality of constraining plates (14; 81; 84) made of a material having a Young's modulus of elasticity of 29.4 x 10⁸ pascal (300 kgf/mm²) or higher and one or a plurality of magnetic layers (15; 82; 85) made of a polymer viscoelastic material having magnetic powder magnetized to have a residual magnetic flux density of about 2.5 x 10⁻³ tesla (25 gausses) to about 1.5 tesla (15,000 gausses) and laminated on said constraining plates (14; 81; 84);
and one of steps a) or b) as follows:
a) using plastic deformation of a weak cross section portion (16a, 16b; 26a-26c; 36a-36d; 83a) of a said constraining plate (14; 81) to plastically deform said constraining plate (14; 81) in such a way as to make substantially coincide the surface shape of said magnetic layer (15; 82) with the shape of said vibrating surface (Ra, Rb, Rc); and using magnetic force of the magnetic powder to cause substantially the overall surface of said magnetic layer (15; 82) to be magnetically adsorbed to said vibrating surface so that said magnetic-vibration-damper of a composite type is attached to said vibrating surface to cause vibration energy of said vibrating body (R) to be lost in said magnetic layer (15; 82) constrained by said constraining plate (14; 81) and to cause the same to be lost attributable to sliding friction at the boundary between said vibrating surface and said magnetic layer (15; 82);
b) using elastic repulsion of a said constraining plate (84) to join said magnetic layer (85) to said vibrating surface to make substantially coincide the surface shape of said magnetic layer (85) with the shape of the vibrating surface; and using magnetic force of the magnetic powder to cause substantially the overall surface of the magnetic layer (85) to be magnetically adsorbed to said vibrating surface so that said magnetic-vibration-damper of composite type is attached to said vibrating surface to cause vibration energy of said vibrating body (V) to be lost in said magnetic layer (85) constrained by said constraining plate (84) and to cause the same to be lost attributable to sliding friction at the boundary between said vibrating surface and said magnetic layer (85).

2. A method of damping vibrations according to claim 1, wherein plastic deformation of said weak cross section portion (16a, 16b; 26a - 26c; 36a - 36d; 83a) is performed by any one of compression of said constraining plate (14; 81) at a specific position, bending of a specific portion of said constraining plate (14; 81), caulking of said weak cross section portion (16a, 16b; 26a - 26c; 36a - 36d; 83a) or their combination.

3. A method according to claim 1 or claim 2, wherein the vibrating body is a railway rail (R).

## Patentansprüche

1. Verfahren zum Dämpfen von Vibrationen einer vibrierenden Oberfläche (Ra, Rb, Rc) eines vibrierenden Körpers (R; V), der aus einem ferromagnetischen Material ausgeführt ist und eine gekrümmte Oberfläche aufweist, wobei das Verfahren die folgenden Schritte aufweist:
Nutzen einer oder mehrerer Schichten eines magnetischen Vibrationsdämpfers eines Verbundtyps (11; 21; 31; 71; 72) mit einer oder einer Mehrzahl einzwängender Platten (14; 81; 84), die aus einem Material mit einem Young Elastizitätsmodul von 29,4 x 10⁸ Pascal (300 kgf/mm²) oder höher hergestellt sind, und einer oder einer Mehrzahl magnetischer Schichten (15; 82; 85), die aus einem polymerischen visko-elastischen Material mit einem magnetischen Pulver, das magnetisiert ist, um eine remanente magnetische Flussdichte von ungefähr 2,5 x 10⁻³ Tesla (25 Gauss) bis ungefähr 1,5 Tesla (15.000 Gauss) aufzuweisen, hergestellt und auf die einzwängenden Platten (14; 81; 84) laminiert sind;
und einen der Schritte a) oder b) wie folgt:
a) Nutzen einer plastischen Deformation eines schwachen Querschnitt-Abschnitts (16a, 16b; 26a - 26c; 36a - 36d; 83a) von einer der einzwängenden Platten (14; 81), um die einzwängende Platte (14; 81) derart plastisch zu verformen, dass die Oberflächenform der magnetischen Schicht (15; 82) im Wesentlichen mit der Form der vibrierenden Oberfläche (Ra, Rb, Rc) übereinstimmt; und Nutzen einer magnetischen Kraft des magnetischen Pulvers um zu bewirken, dass im Wesentlichen die gesamte Oberfläche der magnetischen Schicht (15; 82) an der vibrierenden Oberfläche magnetisch adsorbiert wird, so dass der magnetische Vibrationsdämpfer eines Verbundtyps an der vibrierenden Oberfläche angebracht ist, um zu bewirken, dass sich eine Vibrationsenergie des vibrierenden Körpers (R) in der magnetischen Schicht (15; 82), die durch die einzwängende Platte (14; 81) eingezwängt ist, verliert und um zu bewirken, dass sich selbige zurückführend auf gleitende Reibung an der Grenze zwischen der vibrierenden Oberfläche und der magnetischen Schicht (15; 82) verliert;
b) Nutzen einer elastischen Repulsion von einer der einzwängenden Platten (84), um die magnetische Schicht (85) mit der vibrierenden Oberfläche zu verbinden, um die Oberflächenform der magnetischen Schicht (85) im Wesentlichen mit der Form der vibrierenden Oberfläche übereinstimmend zu bilden; und Nutzen einer magnetischen Kraft des magnetischen Pulvers um zu bewirken, dass im Wesentlichen die gesamte Oberfläche der magnetischen Schicht (85) an der vibrierenden Oberflächen magnetisch adsorbiert wird, so dass der magnetische Vibrationsdämpfer eines Verbundtyps an der vibrierenden Oberfläche angebracht ist, um zu bewirken, dass sich eine Vibrationsenergie des vibrierenden Körpers (V) in der magnetischen Schicht (85), die durch die einzwängende Platte (84) eingezwängt ist, verliert und um zu bewirken, dass sich selbige zurückführend auf gleitende Reibung an der Grenze zwischen der vibrierenden Oberfläche und der magnetischen Schicht (85) verliert.

2. Verfahren zum Dämpfen von Vibrationen nach Anspruch 1, bei dem die plastische Deformation des schwachen Querschnitt-Abschnitts (16a, 16b; 26a - 26c; 36a - 36d; 83a) beliebig durch Zusammendrücken der einzwängenden Platte (14; 81) an einer bestimmten Position, Biegen eines bestimmten Abschnitts der einzwängenden Platte (14; 81), Verstemmen des schwachen Querschnitt-Abschnitts (16a, 16b; 26a - 26c; 36a - 36d; 83a) oder durch ihre Kombination durchgeführt wird.

3. Verfahren nach Anspruch 1 oder 2, bei dem der vibrierende Körper eine Eisenbahnschiene (R) ist.

## Revendications

1. Procédé d'amortissement des vibrations d'une surface vibrante (Ra, Rb, Rc) d'un corps vibrant (R ; V) constitué d'une matière ferromagnétique et comprenant une surface incurvée, ledit procédé comprenant les étapes consistant à :
utiliser une ou plusieurs couche(s) d'amortisseur de vibrations magnétiques d'un type composite (11 ; 21 ; 31 ; 71 ; 72) ayant une ou plusieurs plaques de contrainte (14 ; 81 ; 84) constituée(s) d'une matière ayant un module d'élasticité de Young de 29,4 x 10⁸ pascal (300 kgf / mm²) ou plus et une ou plusieurs couches magnétiques (15 ; 82 ; 85) constituée(s) d'une matière viscoélastique polymère ayant de la poudre magnétique magnétisée pour avoir une densité de flux magnétique résiduelle allant d'environ 2,5 x 10⁻³ tesla (25 gausses) à environ 1,5 tesla (15000 gausses) et stratifiées sur lesdites plaques de contrainte (14 ; 81 ; 84) ;
et une des étapes a) ou b) suivantes :
a) utiliser la déformation plastique d'une partie ayant une section en coupe mince (16a, 16b ; 26a à 26c ; 36a à 36d ; 83a) d'une dite plaque de contrainte (14 ; 81) pour déformer de manière plastique ladite plaque de contrainte (14 ; 81) de manière à faire sensiblement coïncider la forme de surface de ladite couche magnétique (15 ; 82) avec la forme de ladite surface vibrante (Ra, Rb, Rc) ; et utiliser la force magnétique de la poudre magnétique pour que sensiblement toute la surface de ladite couche magnétique (15 ; 82) soit magnétiquement absorbée par ladite surface vibrante de manière à ce que l'amortisseur de vibrations magnétiques d'un type composite soit attaché à ladite surface vibrante pour que l'énergie des vibrations dudit corps vibrant (R) soit perdue dans ladite couche magnétique (15 ; 82) contrainte par ladite plaque de contrainte (14 ; 81) et pour que celle-ci soit perdue en raison de la friction coulissante au niveau de la limite entre ladite surface vibrante et ladite couche magnétique (15 ; 82) ;
b) utiliser la répulsion élastique d'une dite plaque de contrainte (84) pour relier ladite couche magnétique (85) à ladite surface vibrante pour faire sensiblement coïncider la forme de la surface de ladite couche magnétique (85) avec la forme de la surface vibrante ; et utiliser la force magnétique de la poudre magnétique pour que sensiblement toute la surface de la couche magnétique (85) soit magnétiquement adsorbée par ladite surface vibrante de sorte que ledit amortisseur de vibrations magnétiques de type composite est attaché à ladite surface vibrante pour que l'énergie des vibrations dudit corps vibrant (V) soit perdue dans ladite couche magnétique (85) contrainte par ladite plaque de contrainte (84) et pour que celle-ci soit perdue en raison de la friction coulissante au niveau de la limite entre ladite surface vibrante et de ladite couche magnétique (85).

2. Procédé d'amortissement des vibrations selon la revendication 1, dans lequel la déformation plastique de ladite partie ayant une section en coupe mince (16a, 16b ; 26a à 26c ; 36a à 36d ; 83a) est effectuée par l'un quelconque de la compression de ladite plaque de contrainte (14 ; 81) à un emplacement spécifique, du pliage d'une partie spécifique de ladite plaque de contrainte (14 ; 81), du calfatage de ladite partie ayant une section en coupe mince (16a, 16b ; 26a à 26c ; 36a à 36d ; 83a) ou par leur combinaison.

3. Procédé selon la revendication 1 ou la revendication 2, dans lequel le corps vibrant est un rail de chemin de fer (R).
